# EUROPEAN PATENT SPECIFICATION

(11) **EP 4 289 711 B1**
(45) Date of publication and mention of the grant of the patent: **29.05.2024**
(21) Application number: 23174545.6
(22) Date of filing: 22.05.2023
(51) Int. Cl.: B62J 37/00

(54) **STRADDLED VEHICLE**
GRÄTSCHSITZFAHRZEUG
VÉHICULE À SELLE

(30) Priority: 09.06.2022 JP 2022093727
(43) Date of publication of application: 13.12.2023
(73) Proprietor: YAMAHA HATSUDOKI KABUSHIKI KAISHA, Iwata-shi, Shizuoka-ken 438-8501 (JP)
(72) Inventor: Mizutani, Shohei, Iwata-shi (JP); Sawamura, Motoaki, Iwata-shi (JP)
(74) Representative: Grünecker Patent- und Rechtsanwälte PartG mbB

(56) References cited:
- FR-A1- 2 980 822
- US-A1- 2010 078 241

## Description

The present invention relates to a straddled vehicle including a canister.

A straddled vehicle including a canister is has been known in the art as disclosed in JP 2020-51414 A. The canister is connected to the fuel tank to collect the evaporated fuel in the fuel tank. A drain hose is connected to the canister to discharge water. The drain hose extends downward from the canister. Document US2010078241 A1 discloses another known straddled vehicle with all the features of the preamble of independent claim 1.

The drain opening of the drain hose is arranged at a position lower than the canister. When a straddled vehicle travels through a puddle, water may enter the inside of the drain hose through the drain opening. However, since the water inside the drain hose is subject to head pressure, water will not enter the canister unless the pressure near the drain opening exceeds the head pressure. However, when a straddled vehicle travels through a puddle at a relatively high speed, for example, the pressure near the drain opening of the drain hose may become high. In such a case, water that has entered the drain hose through the drain opening may enter the canister.

It is the object of the present invention to provide a straddled vehicle with which water is unlikely to enter the canister from the drain hose. According to the present invention said object is solved by a straddled vehicle having the features of the independent claim 1. Preferred embodiments are laid down in the dependent claims.

A straddled vehicle disclosed herein includes: an under cover having a lower surface facing a ground; a fuel tank; a canister connected to the fuel tank for collecting evaporated fuel in the fuel tank; and a drain hose connected to the canister and having a drain portion that is formed with a drain opening. The under cover includes an insertion portion into which the drain portion of the drain hose is inserted. The insertion portion is formed with a discharge opening that is open downward. The straddled vehicle includes a projection formed on the lower surface of the under cover, arranged forward of the discharge opening, and projecting downward.

With the straddled vehicle described above, when water flows along the lower surface of the under cover when travelling through a puddle, a turbulent flow is generated rearward of the projection, and the pressure near the discharge opening decreases. Therefore, even if water flows into the drain hose through the discharge opening and the drain opening, the water is prevented from entering the canister through the drain hose.

The projection includes a front surface extending rearward in a vehicle front-rear direction and downward, and a lower surface extending rearward in the vehicle front-rear direction from a lower end of the front surface.

As the projection is configured as described above, when water flows along the lower surface of the under cover, it is possible to desirably decrease the pressure near the discharge opening.

The projection may include a rear surface extending forward in the vehicle front-rear direction and upward from a rear end of the lower surface of the projection.

Thus, a turbulent flow is more likely to be generated rearward of the projection. When water flows along the lower surface of the under cover, it is possible to desirably decrease the pressure of the discharge opening.

The projection may be a vortex generator.

The projection may be continuous with the discharge opening.

Thus, when water flows along the lower surface of the under cover, it is possible to desirably decrease the pressure of the discharge opening.

The drain opening of the drain hose may be open rearward in the vehicle front-rear direction.

Thus, water flowing rearward along the lower surface of the under cover is unlikely to enter the drain hose through the drain opening. It is possible to further prevent water from entering the canister through the drain hose.

The insertion portion of the under cover may include a first vertical wall extending upward from a rear edge of the discharge opening, a second vertical wall extending upward from a front edge of the discharge opening, and a horizontal wall extending forward from an upper end of the first vertical wall. The insertion portion may be formed with an insertion opening into which the drain hose is inserted.

Thus, the drain portion of the drain hose can be desirably attached to the insertion portion of the under cover.

A dimension in the vehicle front-rear direction of the projection may be smaller than a dimension in the vehicle front-rear direction of the discharge opening.

Even if the dimension in the vehicle front-rear direction of the projection is relatively small, it is possible to generate a turbulent flow rearward of the projection when the straddled vehicle travels through a puddle. Therefore, it is possible to decrease the pressure near the discharge opening. On the other hand, if the dimension in the vehicle front-rear direction of the discharge opening is relatively large, it is easier to link together the drain opening of the drain hose and the discharge opening at the insertion portion of the under cover. It is easier to attach the drain portion of the drain hose to the insertion portion.

A dimension in a vehicle left-right direction of the projection may be larger than a dimension in the vehicle left-right direction of the insertion opening.

Thus, since the dimension in the vehicle left-right direction of the projection is relatively large, it is possible to desirably decrease the pressure over the entire discharge opening in the left-right direction.

A dimension in the vehicle up-down direction of the projection may be 5 mm to 6 mm.

Then, it is possible with the projection to desirably decrease the pressure near the discharge opening when the straddled vehicle travels through a puddle.

### Advantageous Effects Of Invention

The present invention provides a straddled vehicle with which water is less likely to enter the canister from the drain hose.

### BRIEF DESCRIPTION OF THE DRAWINGS

FIG. 1 is a left side view of a motorcycle according to an embodiment.
FIG. 2 is a perspective view of a part of the motorcycle.
FIG. 3 is a perspective view of an under cover, a canister and a drain hose.
FIG. 4 is a bottom view of the under cover.
FIG. 5 is a perspective view of an insertion portion of the under cover.
FIG. 6 is a cross-sectional view taken along line VI-VI of FIG. 4.
FIG. 7 is a perspective view of a projection and a drain opening.
FIG. 8 is an enlarged bottom view of the projection and the drain opening.

### DETAILED DESCRIPTION OF THE PREFERRED EMBODIMENTS

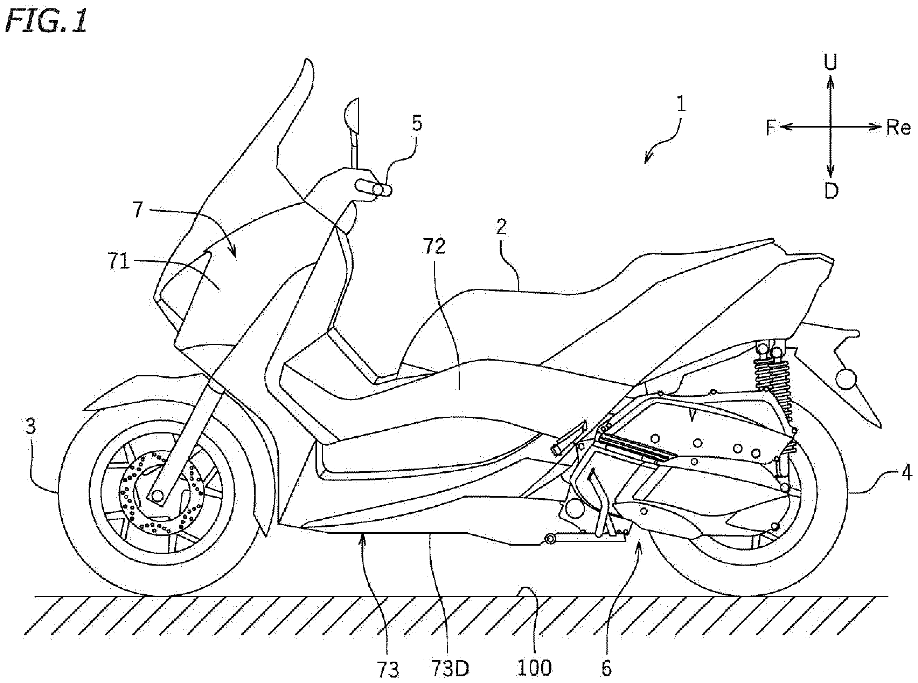

A straddled vehicle according to one embodiment will now be described with reference to the drawings. FIG. 1 is a left side view of a motorcycle 1, which is an example of the straddled vehicle.

The terms front, rear, left, right, up and down, as used in the description below, refer to these directions as viewed from a virtual rider seated on a seat 2 while the motorcycle 1 is standing upright on a horizontal surface with no rider and no load thereon, unless specified otherwise. The designations F, Re, L, R, U and D, as used in the figures, refer to front, rear, left, right, up and down, respectively.

The motorcycle 1 includes a vehicle body frame (not shown), a vehicle body cover 7, a seat 2, a front wheel 3, a rear wheel 4, a handle 5, and an internal combustion engine 6. The vehicle body cover 7 covers the vehicle body frame. The vehicle body cover 7 includes a front cover 71, left and right side covers 72 and an under cover 73. The under cover 73 is facing the ground 100. The under cover 73 is arranged rearward of the front wheel 3 and forward of the rear wheel 4. The under cover 73 is arranged downward of the seat 2. The under cover 73 is arranged downward of at least a part of the internal combustion engine 6.

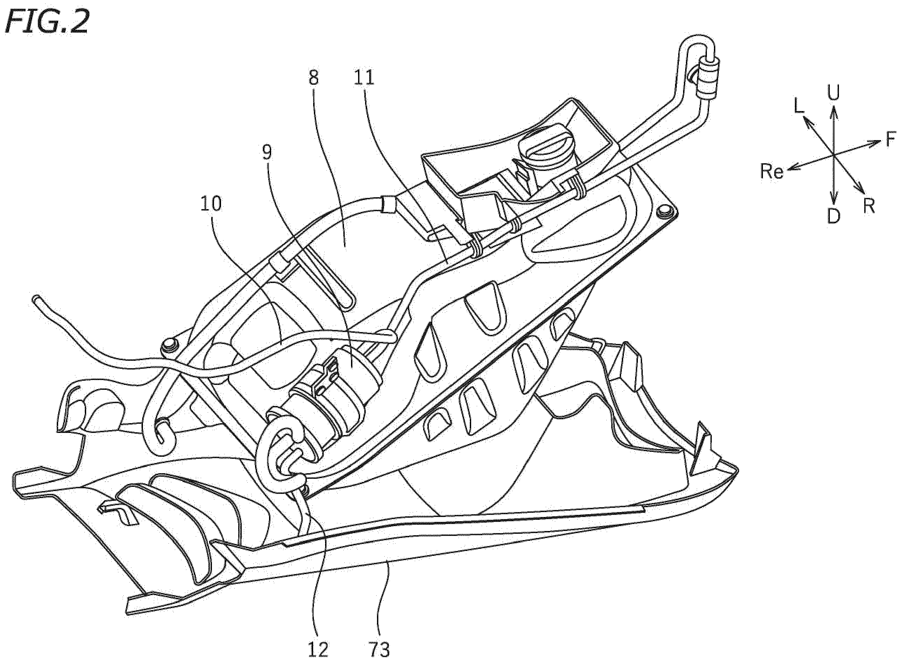

As shown in FIG. 2, the motorcycle 1 includes a fuel tank 8 and a canister 9. There is no particular limitation on the location of the fuel tank 8 and the canister 9, but the fuel tank 8 and the canister 9 are herein arranged upward of the under cover 73. The canister 9 is connected to the internal combustion engine 6 (see FIG. 1) by a hose 10. The fuel tank 8 and the canister 9 are connected together by a pipe 11. Fuel that has evaporated in the fuel tank 8 is collected in the canister 9 through the pipe 11. A drain hose 12 is connected to the canister 9.

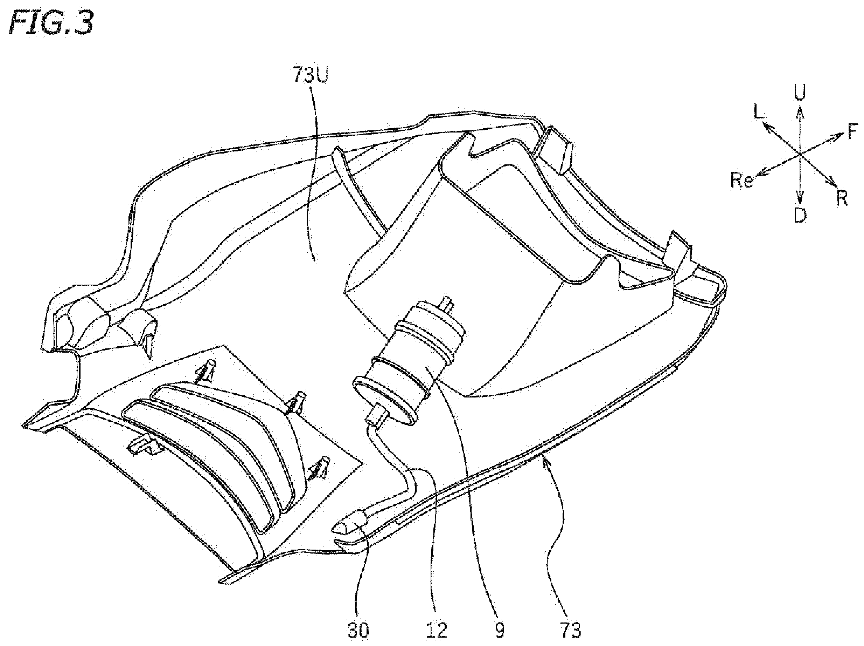

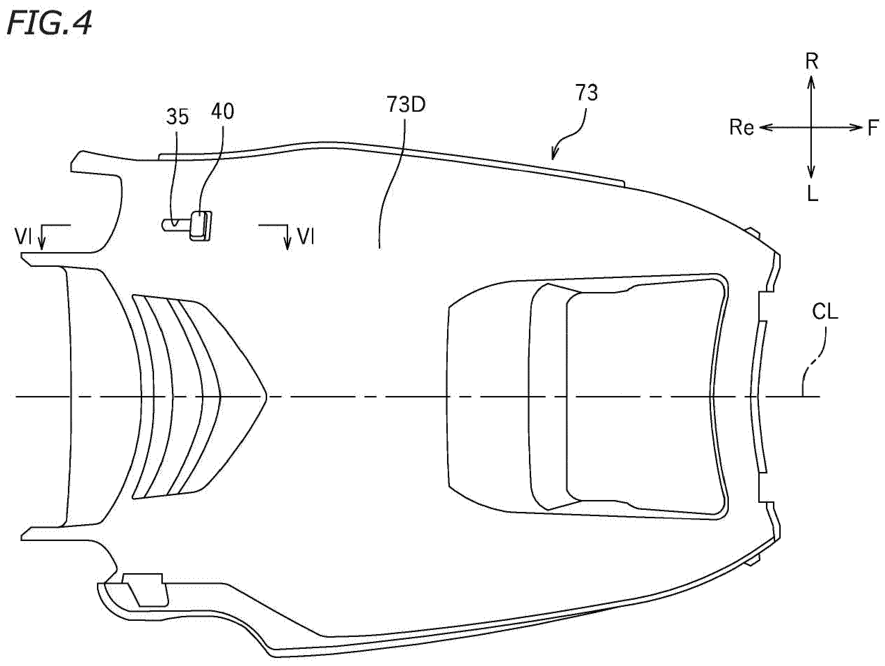

FIG. 3 is a perspective view of the under cover 73, the canister 9 and the drain hose 12. FIG. 4 is a bottom view of the under cover 73. The under cover 73 includes an upper surface 73U and a lower surface 73D facing the ground 100. As shown in FIG. 3, the under cover 73 includes an insertion portion 30 into which the drain hose 12 is inserted.

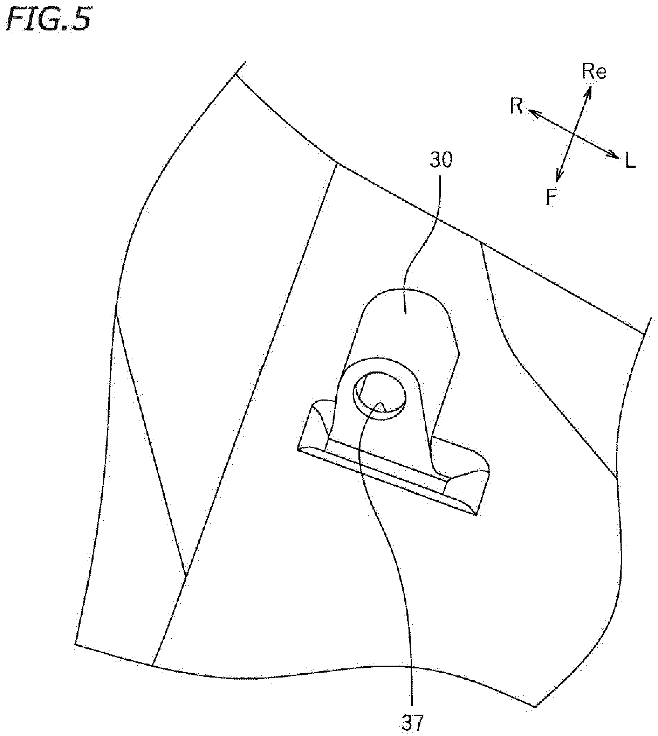

FIG. 5 is a perspective view of the insertion portion 30. In the present embodiment, the insertion portion 30 is formed in a tubular shape that is open forward and closed rearward. The insertion portion 30 is formed with an insertion opening 37 that is open forward. The insertion portion 30 extends rearward from the insertion opening 37. The insertion portion 30 projects upward from the upper surface 73U of the under cover 73.

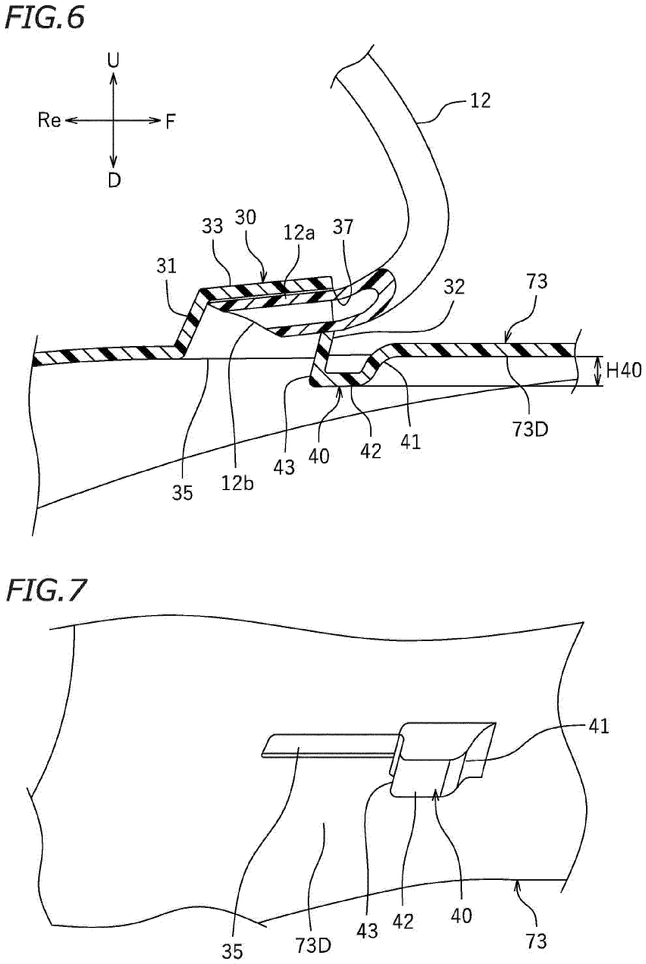

FIG. 6 is a cross-sectional view taken along line VI-VI of FIG. 4. The drain hose 12 includes a drain portion 12a inserted into the insertion portion 30. The drain portion 12a is an end portion of the drain hose 12. The drain portion 12a passes through the insertion opening 37. The drain portion 12a is formed with a drain opening 12b. The drain opening 12b is open rearward. The drain opening 12b is open downward. Note however there is no particular limitation on the direction of the drain opening 12b.

As shown in FIG. 4, a discharge opening 35 is formed on the lower surface 73D of the under cover 73. The discharge opening 35 is open downward. As shown in FIG. 6, the discharge opening 35 is formed directly below the insertion portion 30. The insertion opening 37 is connected to the discharge opening 35. The discharge opening 35 is formed directly below the drain opening 12b of the drain hose 12.

As shown in FIG. 6, the insertion portion 30 includes a first vertical wall 31 extending upward from the rear edge of the discharge opening 35, a second vertical wall 32 extending upward from the front edge of the discharge opening 35, and a horizontal wall 33 extending forward from the upper end portion of the first vertical wall 31.

As shown in FIG. 4, a projection 40 is formed on the lower surface 73D of the under cover 73. FIG. 7 is a perspective view of the projection 40. The projection 40 projects downward. The projection 40 is a member that generates a turbulent flow rearward of a projection 40 when water flows along the lower surface 73D of the under cover 73. The projection 40 is a vortex generator. As shown in FIG. 6, in the present embodiment, the projection 40 includes a front surface 41 extending rearward and downward, a lower surface 42 extending rearward from the lower end of the front surface 41, and a rear surface 43 extending forward and upward from the rear end of the lower surface 42. Note however that it is sufficient for the projection 40 to be shaped so as to generate a turbulent flow rearward, and there is no particular limitation on the specific shape thereof. The projection 40 may be spaced apart forward from the discharge opening 35, but in the present embodiment the projection 40 is continuous with the discharge opening 35. The rear surface 43 of the projection 40 partitions the front side of the discharge opening 35.

As shown in FIG. 4, the projection 40 is arranged rightward of the vehicle center line CL. Note however that there is no particular limitation on the location of the projection 40. The projection 40 may be arranged leftward of the vehicle center line CL. The projection 40 may be arranged on the vehicle center line CL.

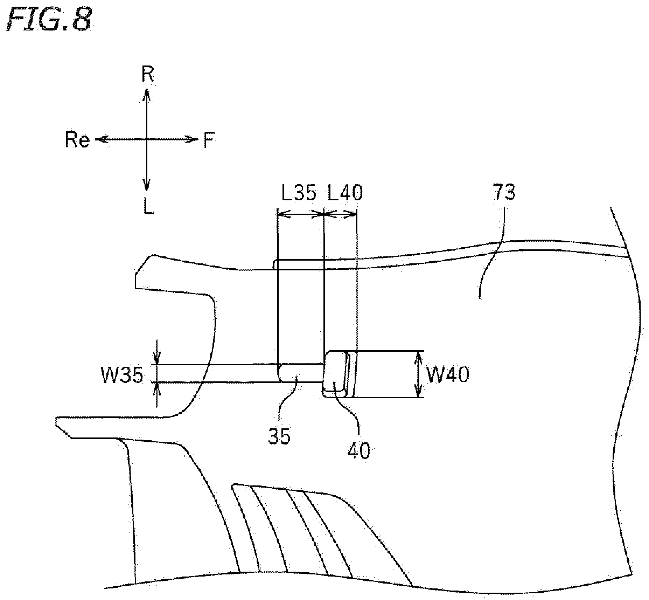

FIG. 8 is an enlarged bottom view of the projection 40 and the discharge opening 35. As shown in FIG. 8, the dimension L40 in the front-rear direction of the projection 40 is smaller than the dimension L35 in the front-rear direction of the discharge opening 35. The dimension W40 in the left-right direction of the projection 40 is larger than the dimension W35 in the left-right direction of the discharge opening 35. As shown in FIG. 6, the dimension H40 in the up-down direction of the projection 40 is 5 mm to 6 mm, for example. Note however that the dimensions of the projection 40 and the discharge opening 35 described here are examples. There is no particularly limitation on the dimensions of the projection 40 and the discharge opening 35. The dimension L40 in the front-rear direction of the projection 40 does not need to be smaller than the dimension L35 in the front-rear direction of the discharge opening 35. The dimension W40 in the left-right direction of the projection 40 does not need to be larger than the dimension W35 in the left-right direction of the discharge opening 35.

As described above, the drain portion 12a of the drain hose 12 is inserted into the insertion portion 30 of the under cover 73. Water accumulated in the canister 9 is discharged from the discharge opening 35 of the under cover 73 through the drain hose 12.

Now, there are cases where the motorcycle 1 travels through a relatively deep puddle. In such a case, the motorcycle 1 will be traveling with the lower surface 73D of the under cover 73 immersed in water. Since the discharge opening 35 is formed on the under cover 73, water from the puddle may enter the inside of the drain hose 12 through the discharge opening 35. However, the canister 9 is arranged at a position higher than the drain opening 12b of the drain hose 12. Since water inside the drain hose 12 is subject to head pressure, water will not rise inside the drain hose 12 to enter the canister 9 unless the pressure at the drain opening 12b becomes higher than the head pressure. However, if the motorcycle 1 is traveling through a puddle at a relatively high speed, the pressure near the drain opening 12b of the drain hose 12 may become high. Water flowing into the drain hose 12 from the drain opening 12b may enter the canister 9.

However, according to the present embodiment, the discharge opening 35 of the under cover 73 is open downward, and the projection 40 is arranged forward of the discharge opening 35. When water flows along the lower surface 73D of the under cover 73, a turbulent flow is generated rearward of the projection 40. This causes a decrease in the pressure of the water rearward of the projection 40. Since the discharge opening 35 is formed rearward of the projection 40, the pressure of the water near the discharge opening 35 decreases. Therefore, even if water flows into the drain hose 12 through the discharge opening 35 and the drain opening 12b, the water is prevented from rising inside the drain hose 12 to enter the canister 9.

As described above, according to the present embodiment, when water flows along the lower surface 73D of the under cover 73 when the motorcycle 1 travels through a puddle, a turbulent flow is generated rearward of the projection 40, and the pressure near the discharge opening 35 decreases. Therefore, even if water flows into the drain hose 12 through the discharge opening 35 and the drain opening 12b, the water is prevented from entering the canister 9 through the drain hose 12.

While there is no particular limitation on the shape of the projection 40 as long as it can generate a turbulent flow, the projection 40 according to the present embodiment includes the front surface 41 extending rearward and downward and the lower surface 42 extending rearward from the lower end of the front surface 41. According to the present embodiment, the pressure near the discharge opening 35 can be desirably decreased when the motorcycle 1 travels through a puddle. It is possible to effectively prevent water from entering the canister 9.

While the rear surface 43 of the projection 40 may extend rearward and upward or may extend vertically, the rear surface 43 of the projection 40 extends forward and upward in the present embodiment. Thus, the flow is likely to detach rearward of the projection 40. Therefore, a turbulent flow is more likely to be generated rearward of the projection 40. According to the present embodiment, the pressure near the discharge opening 35 can be desirably decreased when the motorcycle 1 travels through a puddle. It is possible to effectively prevent water from entering the canister 9.

The projection 40 may be spaced apart forward from the discharge opening 35, but in the present embodiment the projection 40 is continuous with the discharge opening 35. The discharge opening 35 is formed immediately rearward of the projection 40. Thus, it is possible to desirably decrease the pressure near the discharge opening 35. It is possible to effectively prevent water from entering the canister 9.

According to the present embodiment, the drain opening 12b of the drain hose 12 is open rearward. Since water flows rearward along the lower surface 73D of the under cover 73, water is unlikely to flow into the drain hose 12 through the drain opening 12b. It is possible to effectively prevent water from entering the canister 9.

According to the present embodiment, the insertion portion 30 of the under cover 73 has the first vertical wall 31 extending upward from the rear edge of the discharge opening 35, the second vertical wall 32 extending upward from the front edge of the discharge opening 35, and the horizontal wall 33 extending forward from the upper end of the first vertical wall 31. According to the present embodiment, the drain portion 12a of the drain hose 12 can be desirably attached to the insertion portion 30 of the under cover 73.

According to the present embodiment, the dimension L40 in the front-rear direction of the projection 40 is smaller than the dimension L35 in the front-rear direction of the discharge opening 35. Even if the dimension L40 in the front-rear direction of the projection 40 is relatively small, it is possible to generate a turbulent flow rearward of the projection 40 when the motorcycle 1 travels through a puddle. Therefore, it is possible to decrease the pressure near the discharge opening 35. On the other hand, as the front-rear dimension L35 in the front-rear direction of the discharge opening 35 is relatively large, it is easier to link together the drain opening 12b of the drain hose 12 and the discharge opening 35 at the insertion portion 30 of the under cover 73. Thus, it is easier to attach the drain portion 12a of the drain hose 12 to the insertion portion 30.

According to the present embodiment, the dimension W40 in the left-right direction of the projection 40 is larger than the dimension W35 in the left-right direction of the discharge opening 35. The dimension W40 in the left-right direction of the projection 40 is relatively large. Therefore, it is possible to desirably decrease the pressure over the entire discharge opening 35 in the left-right direction. It is possible to effectively prevent water from entering the canister 9.

According to the present embodiment, the dimension in the up-down direction of the projection 40 is 5 mm to 6 mm. It is possible with the projection 40 to desirably decrease the pressure near the discharge opening 35 when the motorcycle 1 travels through a puddle. It is possible to effectively prevent water from entering the canister 9.

While the motorcycle 1 according to one embodiment has been described above, the embodiment is merely an example. Various other embodiments are possible.

A straddled vehicle refers to a vehicle that is straddled by a rider. The straddled vehicle is not limited to the motorcycle 1. The straddled vehicle may be an auto tricycle, an ATV (All Terrain Vehicle), or a snowmobile, for example.

### Reference Signs List

1: Motorcycle (straddled vehicle), 8: Fuel tank, 9: Canister, 12: Drain hose, 12a: Drain portion, 12b: Drain opening, 30: Insertion portion, 31: First vertical wall, 32: Second vertical wall, 33: Horizontal wall, 35: Discharge opening, 37: Insertion opening, 40: Projection, 41: Front surface, 42: Lower surface, 43: Rear surface, 73: Under cover, 73D: Lower surface of undercover, 100: Ground

## Claims

1. A straddled vehicle (1) comprising:
an under cover (73) having a lower surface (73D) facing downward in a vehicle up-down direction;
a fuel tank (8);
a canister (9) connected to the fuel tank (8) and configured for collecting evaporated fuel in the fuel tank (8); and
a drain hose (12) connected to the canister (9) and having a drain portion (12a) that is formed with a drain opening (12b), wherein:
the under cover (73) includes an insertion portion (30) into which the drain portion (12a) of the drain hose (12) is inserted;
the insertion portion (30) is formed with a discharge opening (35) that is open downward in the vehicle up-down direction; and **characterised in that** the straddled vehicle (1) includes a projection (40) formed on the lower surface (73D) of the under cover (73), arranged forward of the discharge opening (35) in a vehicle front-rear direction, and projecting downward in the vehicle up-down direction.

2. The straddled vehicle (1) according to claim 1, wherein the projection (40) includes a front surface (41) extending rearward in the vehicle front-rear direction and downward in the vehicle up-down direction, and a lower surface (42) extending rearward in the vehicle front-rear direction from a lower end of the front surface (41).

3. The straddled vehicle (1) according to claim 2, wherein the projection (40) includes a rear surface (43) extending forward in the vehicle front-rear direction and upward from a rear end of the lower surface (42) of the projection (40) in the vehicle up-down direction.

4. The straddled vehicle (1) according to any one of claims 1 to 3, wherein the projection (40) is configured as a vortex generator.

5. The straddled vehicle (1) according to any one of claims 1 to 4, wherein the projection (40) is continuous with the discharge opening (35).

6. The straddled vehicle (1) according to any one of claims 1 to 5, wherein the drain opening (12b) of the drain hose (12) is open rearward in the vehicle front-rear direction.

7. The straddled vehicle (1) according to any one of claims 1 to 6, wherein:
the insertion portion (30) of the under cover (73) includes a first vertical wall (31) extending upward from a rear edge of the discharge opening (35) in the vehicle up-down direction, a second vertical wall (32) extending upward from a front edge of the discharge opening (35) in the vehicle up-down direction, and a horizontal wall (33) extending forward from an upper end of the first vertical wall (31) in the vehicle front-rear direction; and
the insertion portion (30) is formed with an insertion opening (37) into which the drain hose (12) is inserted.

8. The straddled vehicle (1) according to any one of claims 1 to 7, wherein a dimension (L40) in the vehicle front-rear direction of the projection (40) is smaller than a dimension (L35) in the vehicle front-rear direction of the discharge opening (35).

9. The straddled vehicle (1) according to any one of claims 1 to 8, wherein a dimension (W40) in a vehicle left-right direction of the projection (40) is larger than a dimension (W35) in the vehicle left-right direction of the insertion opening (35).

10. The straddled vehicle (1) according to any one of claims 1 to 9, wherein a dimension (H40) in the vehicle up-down direction of the projection (40) is 5 mm to 6 mm.

11. The straddled vehicle (1) according to any one of claims 1 to 10, wherein the straddled vehicle (1) is provided with at least one front wheel (3) and at least one rear wheel (4) to be placed on a ground, respectively, wherein the lower surface (73D) of the under cover (73) is directly facing the ground (100).

## Patentansprüche

1. Ein Spreiz-Sitz-Fahrzeug (1), das umfasst:
eine untere Abdeckung (73), die eine unteren Fläche (73D) hat, die in einer Fahrzeug-Auf-Ab-Richtung nach unten weist;
einen Kraftstofftank (8);
einen Kanister (9), der mit dem Kraftstofftank (8) verbunden ist, und konfiguriert, um verdampften Kraftstoff im Kraftstofftank (8) zu sammeln; und
einen Ablassschlauch (12), der mit dem Kanister (9) verbunden ist und einen Ablassabschnitt (12a) hat, der mit einer Ablassöffnung (12b) ausgebildet ist, wobei:
die untere Abdeckung (73) einen Einsetzabschnitt (30) enthält, in den der Ablaufabschnitt (12a) des Ablaufschlauchs (12) eingesetzt ist;
der Einsetzabschnitt (30) mit einer Auslassöffnung (35) ausgebildet ist, die in der Fahrzeug-Auf-Ab-Richtung nach unten offen ist; und **dadurch gekennzeichnet, dass**
das Spreiz-Sitz-Fahrzeug (1) einen Vorsprung (40) enthält, der an der unteren Fläche (73D) der unteren Abdeckung (73) ausgebildet ist, vor der Auslassöffnung (35) in einer Fahrzeug-Vorder-Rück-Richtung angeordnet, und in der Fahrzeug-Auf-Ab-Richtung nach unten ragt.

2. Das Spreiz-Sitz-Fahrzeug (1) gemäß Anspruch 1, wobei der Vorsprung (40) eine vordere Fläche (41), die sich nach hinten in der Fahrzeug-Vorder-Rück-Richtung und nach unten in der Fahrzeug-Auf-Ab-Richtung erstreckt, und eine untere Fläche (42), die sich in der Fahrzeug-Vorder-Rück-Richtung nach hinten von einem unteren Ende der vorderen Fläche (41) erstreckt, enthält.

3. Das Spreiz-Sitz-Fahrzeug (1) gemäß Anspruch 2, wobei der Vorsprung (40) eine hintere Fläche (43) enthält, die sich nach vorne in der Fahrzeug-Vorder-Rück-Richtung und nach oben von einem hinteren Ende der unteren Fläche (42) des Vorsprungs (40) in der Fahrzeug-Auf-Ab-Richtung erstreckt.

4. Das Spreiz-Sitz-Fahrzeug (1) gemäß irgendeinem der Ansprüche 1 bis 3, wobei der Vorsprung (40) als Wirbelerzeuger ausgebildet ist.

5. Das Spreiz-Sitz-Fahrzeug (1) gemäß irgendeinem der Ansprüche 1 bis 4, wobei der Vorsprung (40) kontinuierlich mit der Auslassöffnung (35) ist.

6. Das Spreiz-Sitz-Fahrzeug (1) gemäß irgendeinem der Ansprüche 1 bis 5, wobei die Ablassöffnung (12b) des Ablassschlauchs (12) nach hinten in Fahrzeug-Vorder-Rück-Richtung offen ist.

7. Das Spreiz-Sitz-Fahrzeug (1) gemäß irgendeinem der Ansprüche 1 bis 6, wobei:
der Einsetzabschnitt (30) der unteren Abdeckung (73) eine erste vertikale Wand (31), die sich von einer hinteren Kante der Auslassöffnung (35) nach oben in der Fahrzeug-Auf-Ab-Richtung erstreckt, eine zweite vertikale Wand (32), die sich von einer vorderen Kante der Auslassöffnung (35) nach oben in der Fahrzeug-Auf-Ab-Richtung erstreckt, und eine horizontale Wand (33), die sich von einem oberen Ende der ersten vertikalen Wand (31) nach vorne in der Fahrzeug-Vorder-Rück-Richtung erstreckt, enthält; und
der Einsetzabschnitt (30) mit einer Einsetzöffnung (37) ausgebildet ist, in die der Ablassschlauch (12) eingesetzt ist.

8. Das Spreiz-Sitz-Fahrzeug (1) gemäß irgendeinem der Ansprüche 1 bis 7, wobei eine Abmessung (L40) des Vorsprungs (40) in Fahrzeug-Vorder-Rück-Richtung kleiner ist als eine Abmessung (L35) der Auslassöffnung (35) in Fahrzeug-Vorder-Rück-Richtung.

9. Das Spreiz-Sitz-Fahrzeug (1) gemäß irgendeinem der Ansprüche 1 bis 8, wobei eine Abmessung (W40) des Vorsprungs (40) in einer Fahrzeug-Links-Rechts-Richtung größer ist als eine Abmessung (W35) der Einlassöffnung (35) in der Fahrzeug-Links-Rechts-Richtung.

10. Das Spreiz-Sitz-Fahrzeug (1) gemäß irgendeinem der Ansprüche 1 bis 9, wobei eine Abmessung (H40) des Vorsprungs (40) in Fahrzeug-Auf-Ab-Richtung 5 mm bis 6 mm ist.

11. Das Spreiz-Sitz-Fahrzeug (1) gemäß irgendeinem der Ansprüche 1 bis 10, wobei Spreiz-Sitz-Fahrzeug (1) mit zumindest einem Vorderrad (3) und zumindest einem Hinterrad (4) vorgesehen ist, die auf dem Boden abgestellt werden können, wobei die untere Fläche (73D) der unteren Abdeckung (73) direkt dem Boden (100) zugewandt ist.

## Revendications

1. Véhicule à enfourcher (1), comprenant :
un sous-couvercle (73) ayant une surface inférieure (73D) faisant face vers le bas dans une direction haut-bas du véhicule ;
un réservoir de carburant (8) ;
une bouteille (9) connectée au réservoir de carburant (8) et configurée pour collecter le carburant évaporé dans le réservoir de carburant (8) ; et
un tuyau de drainage (12) connecté à la bouteille (9) et ayant une portion de drainage (12a) qui est formée avec une ouverture de drainage (12b), dans lequel :
le sous-couvercle (73) comprend une portion d'insertion (30) dans laquelle la portion de drainage (12a) du tuyau de drainage (12) est insérée ;
la portion d'insertion (30) est formée avec une ouverture de décharge (35) qui est ouverte vers le bas dans la direction haut-bas du véhicule ; et
**caractérisé en ce que**
le véhicule à enfourcher (1) comporte une projection (40) formée sur la surface inférieure (73D) du sous-couvercle (73), agencée vers l'avant de l'ouverture de décharge (35) dans une direction avant-arrière du véhicule, et se projetant vers le bas dans le direction haut-bas du véhicule.

2. Véhicule à enfourcher (1) selon la revendication 1, dans lequel la projection (40) comprend une surface avant (41) s'étendant vers l'arrière dans la direction avant-arrière du véhicule et vers le bas dans la direction haut-bas du véhicule, et une surface inférieure (42) s'étendant vers l'arrière dans la direction avant-arrière du véhicule depuis une extrémité inférieure de la surface avant (41).

3. Véhicule à enfourcher (1) selon la revendication 2, dans lequel la projection (40) comprend une surface arrière (43) s'étendant vers l'avant dans la direction avant-arrière du véhicule et vers le haut depuis une extrémité arrière de la surface inférieure (42) de la projection (40) dans la direction haut-bas du véhicule.

4. Véhicule à enfourcher (1) selon l'une quelconque des revendications 1 à 3, dans lequel la projection (40) est configurée comme un générateur de vortex.

5. Véhicule à enfourcher (1) selon l'une quelconque des revendications 1 à 4, dans lequel la projection (40) est continue avec l'ouverture de décharge (35).

6. Véhicule à enfourcher (1) selon l'une quelconque des revendications 1 à 5, dans lequel l'ouverture de drainage (12b) du tuyau de drainage (12) est ouverte vers l'arrière dans la direction avant-arrière du véhicule.

7. Véhicule à enfourcher (1) selon l'une quelconque des revendications 1 à 6, dans lequel :
la portion d'insertion (30) du sous-couvercle (73) comprend une première paroi verticale (31) s'étendant vers le haut depuis un bord arrière de l'ouverture de décharge (35) dans la direction haut-bas du véhicule, une deuxième paroi verticale (32) s'étendant vers le haut depuis un bord avant de l'ouverture de décharge (35) dans la direction haut-bas du véhicule, et une paroi horizontale (33) s'étendant vers l'avant depuis une extrémité supérieure de la première paroi verticale (31) dans la direction avant-arrière du véhicule ; et
la portion d'insertion (30) est formée avec une ouverture d'insertion (37) dans laquelle le tuyau de drainage (12) est inséré.

8. Véhicule à enfourcher (1) selon l'une quelconque des revendications 1 à 7, dans lequel une dimension (L40) de la projection (40) dans la direction avant-arrière du véhicule est inférieure à une dimension (L35) de l'ouverture de décharge (35) dans la direction avant-arrière du véhicule.

9. Véhicule à enfourcher (1) selon l'une quelconque des revendications 1 à 8, dans lequel une dimension (W40) de la projection (40) dans la direction gauche-droite du véhicule est supérieure à une dimension (W385) de l'ouverture d'insertion (35) dans la direction gauche-droite du véhicule.

10. Véhicule à enfourcher (1) selon l'une quelconque des revendications 1 à 9, dans lequel une dimension (H40) de la projection (40) dans la direction haut-bas du véhicule est de 5 mm à 6 mm.

11. Véhicule à enfourcher (1) selon l'une quelconque des revendications 1 à 10, dans lequel le véhicule à enfourcher (1) est pourvu respectivement d'au moins une roue avant (3) et d'au moins une roue arrière (4) pour être posé sur un sol, dans lequel la surface inférieure (73D) du sous-couvercle (73) fait directement face au sol (100).
